# EUROPÄISCHE PATENTANMELDUNG

(11) **EP 3 738 857 A2**
(43) Veröffentlichungstag der Anmeldung: **18.11.2020**
(21) Anmeldenummer: 20169753.9
(22) Anmeldetag: 16.04.2020
(51) Int. Cl.: B61L 15/00

(54) **VERFAHREN, TRANSPORTWAGEN UND SYSTEM ZUR ÜBERWACHUNG EINER KÜHLKETTE**

(30) Priorität: 13.05.2019 DE 102019206900
(71) Anmelder: Siemens Mobility GmbH, 81739 München (DE)
(72) Erfinder: Gärtner, Ralph, 41379 Brüggen (DE); Kübeck, Thomas, 47929 Grefrath (DE)

(57) **Zusammenfassung**

Die Erfindung betrifft ein Verfahren zur Überwachung einer Kühlkette von zu kühlendem Beladungsgut eines Transportwagens zur Versorgung eines Personenbeförderungsfahrzeugs betrieben in einem getakteten Transportsystem.

Es wird vorgeschlagen, dass örtlich zwischen einem ersten Punkt und zumindest einem zweiten Punkt zumindest eine Temperatur in der Kühlkette überwacht wird, örtlich zwischen dem ersten Punkt und dem zweiten Punkt die zumindest eine Temperatur durch eine Temperaturüberwachungsvorrichtung gemessen wird und zumindest eine Temperaturüberwachungsinformation bezogen auf die gemessene Temperatur am zumindest zweiten Punkt an das Personenbeförderungsfahrzeug übermittelt wird.

Mit einem solchen Verfahren kann sichergestellt werden, dass eine Kühlung des Beladungsguts zuverlässig überwacht wird.

## Beschreibung

Die Erfindung betrifft ein Verfahren zur Überwachung einer Kühlkette, einen Transportwagen für ein solches Verfahren sowie ein System aus zumindest einem Personenbeförderungsfahrzeug und zumindest einem solchen Transportwagen.

Im Reiseverkehr hat für Betreiber moderner Verkehrsnetze, wie beispielsweise einem Betreiber eines Zugnetzes oder Anbieter im Luftverkehr, eine hohe Auslastung einen wettbewerbsverbessernden Stellenwert. Dadurch ergibt sich die Notwendigkeit, das Verkehrsnetz mit einer hohen Taktung zu betreiben. Hierbei müssen alle beeinflussenden Faktoren, wie beispielsweise eine nötige Anzahl von Verkehrsmitteln bzw. Personenbeförderungsfahrzeugen, wie Züge, U-Bahnen oder Flugzeuge, eine benötigte Anzahl an Personal, Wartungszeiten, eine Aufenthaltszeit in Depots oder an Bahnhöfen, eine Ausstattung des Verkehrsnetzes selbst (Gleisanlagen, Luftraum, Bahnhöfe, Flughäfen etc.) auf diese spezielle Taktung abgestimmt oder ausgerichtet werden. Zudem erwarten Reisende in den heutigen Zeiten einen hohen Komfort, wie beispielsweise Entertainmentausstattung, Lademöglichkeiten für Elektrogeräte, WLAN oder auch eine Vielzahl von kalten oder warmen Getränken und Speisen.

Es ist beispielsweise bekannt, dass in Schienenfahrzeugen, spezielle in Hochgeschwindigkeitsfahrzeugen, Bordküchen/Bordrestaurants (sogenannte Galleys) eingesetzt werden, die eine Versorgung der Fahrgäste mit Speisen und Getränken bereitstellen. Diese Versorgung kann unterschiedlich erfolgen, z. B. über vorgefertigte Speisen (analog zum Flugzeug) oder Tiefkühlkost, welche nach Bestellung durch einen Fahrgast noch vollständig zubereitet/erwärmt werden muss. Diese Speisen werden zumeist mit Hilfe von Transportwagen (sogenannte Bordtrolleys) auf das Schienenfahrzeug gebracht. Da es sich hier um Normal- und Tiefkühlkost handeln kann, sind kurze Wege und eine schnelle Beladung des Schienenfahrzeugs von elementarer Wichtigkeit, da sonst ein hoher Anteil an Energieverloren geht und demzufolge diese Energie auch wieder zugeführt werden muss. Ein weiterer Aspekt ist die gesetzliche vorgeschriebene Kühlkette, welche dokumentiert und eingehalten werden muss.

Bisher muss darauf geachtet werden, dass die beladenen Transportwagen erst kurz vor der Beladung des Schienenfahrzeugs zum Bahnsteig gebracht werden. Kommt es hierbei jedoch zu unplanmäßigen Verspätung des Zielfahrzeugs, kann es vorkommen, dass die befüllten Transportwagen wieder zurück in den Kühlraum am Bahnhof gebracht werden oder die Beladung des Zielfahrzeugs komplett ausgesetzt werden müssen.

Ferner kann es vorkommen, dass die Transportwagen nicht rechtzeitig wieder in den Kühlraum gebracht werden können, wodurch es zu einer - außerhalb der gesetzlich vorgeschriebenen Vorgaben - Unterbrechung der Kühlkette kommen kann, was wiederum zur Aussortierung der Ware und folglich zu erheblichen finanziellen Verlusten des Betreibers führen kann. Des Weiteren kann diese Nichtbeladung des Fahrzeugs zu einem deutlichen Reputationsverlust bei den Fahrgästen führen.

Es ist eine Aufgabe der vorliegenden Erfindung ein Verfahren bereitzustellen, bei dem sichergestellt werden kann, dass eine Versorgung eines Personenbeförderungsfahrzeugs mit intakter/einwandfreier Versorgungsware zuverlässig und verlustarm, bevorzugt verlustfrei, erfolgt. Ferner soll eine zuverlässige Dokumentation des Zustands des Versorgungsguts zur Verfügung gestellt werden.

Es ist eine weitere Aufgabe der vorliegenden Erfindung ein Transportwagen bereitzustellen, mittels dem der Zustand des Versorgungsguts zuverlässig dokumentiert und kontrolliert sowie aufrechterhalten werden kann.

Es ist zudem eine weitere Aufgabe der vorliegenden Erfindung ein System aus einem Personenbeförderungsfahrzeug und zumindest einem Transportwagen bereitzustellen, bei dem sicher gestellt werden kann, dass Dokumentationsinformationen zuverlässig erfasst, ausgetauscht und verarbeitet werden können.

Diese Aufgaben werden erfindungsgemäß gelöst mit einem Verfahren, einem Transportwagen und einem System aus einem Personenfahrzeug und zumindest einem Transportwagen mit den Merkmalen der unabhängigen Ansprüche. Günstige Ausgestaltungen und Vorteile der Erfindung ergeben sich aus den weiteren entsprechen abhängigen Ansprüchen, der Zeichnung und der Beschreibung.

Die Erfindung geht aus von einem Verfahren zur Überwachung einer Kühlkette von zu kühlendem Beladungsgut eines Transportwagens zur Versorgung eines Personenbeförderungsfahrzeugs betrieben in einem getakteten Transportsystem.

Es wird vorgeschlagen, dass zwischen einem örtlich ersten Punkt und zumindest einem örtlich zweiten Punkt zumindest eine Temperatur der Kühlkette überwacht wird, zwischen dem ersten Punkt und dem zweiten Punkt die zumindest eine Temperatur durch eine Temperaturüberwachungsvorrichtung gemessen wird und zumindest eine Temperaturüberwachungsinformation bezogen auf die gemessene Temperatur am zumindest zweiten Punkt an das Personenbeförderungsfahrzeug übermittelt wird.

Durch das erfindungsgemäße Verfahren kann sichergestellt werden, dass eine Kühlkette zuverlässig eingehalten werden kann. Dadurch ergibt sich gegenüber gegenwärtig genutzten Verfahren ein geringerer Verbrauch an Ressourcen, insbesondere wegen entfallender Lebensmittelentsorgung oder ineffizienter oder übermäßig stromverbrauchender Kühlbedingungen. Ferner kann eine Kühlanlage gegenüber dem Stand der Technik exakter und schneller auf spezielle Kühlanforderungen reagieren und somit starken Temperaturschwankungen am Beladungsgut entgegenwirken.

Selbst wenn bestimmte Begriffe im Singular oder Plural in den Patentansprüchen oder der Beschreibung verwendet werden, soll der Schutzbereich des Patents bzw. der Anmeldung nicht nur auf diese spezifisch genannte Anzahl beschränkt werden. Der Schutzbereich der Erfindung soll sich auch auf eine Einzahl, Vielzahl oder eine andere Anzahl der entsprechenden Struktur beziehen.

Unter Überwachung oder Überwachen soll hier auch Messen oder Beobachten verstanden werden. Eine Kühlkette soll hier ein System darstellen, das eine durchgängige Kühlung beim Transport von Beladungsgut (z. B. Lebensmittel, medizinisch oder chemische Produkte) zwischen zumindest zwei örtlichen Punkten bereitstellt. Hierfür weist das System gegenständliche Merkmale, wie bspw. Kühlmittel, Stromversorgung und/oder Sensoren, wie auch verfahrenstechnische Merkmale, wie bspw. einer Erfassung von Daten, einer Übermittlung der Daten und/oder einer Auswertung der Daten, die zwischen den zwei Punkten durchgeführt werden können, auf.

Ein örtlich erster Punkt stellt hier den Ort dar an dem sich der beladene Transportwagen unmittelbar vor dem Transport zum Personenbeförderungsfahrzeug befand, beispielsweise ein Lagerraum (Kühlraum) am Bahnhof oder auch ein Beladungsort, an welchem der Transportwagen mit Beladungsgut bestückt wurde (bspw. bei einem Anbieter des Beladungsguts selbst). Ein örtlich zweiter Punkt stellt hier den Ort dar an dem die die Temperaturüberwachungsinformation an das Personenbeförderungsfahrzeug übergeben wird. Dies erfolgt beispielsweise an einer Zugtür durch die der Transportwagen ins Personenbeförderungsfahrzeug geladen wird oder in einem Kühlraum im Personenbeförderungsfahrzeug. Der örtlich zweite Punkt kann auch ein Zielort des Transportwagens sein.

Alternativ und/oder zusätzlich zu einer Definition "des Transports" als "zwischen einem örtlich ersten Punkt (Ort) und zumindest einem örtlich zweiten Punkt (Ort)" könnte der Transport auch als "zeitlich zwischen einem ersten (Zeit)Punkt und zumindest einem zweiten (Zeit)Punkt" definiert werden. Als erster (Zeit)Punkt käme hier beispielsweise in Frage: Ein Abschluss eines Beladungsvorgangs des Transportwagens mit Beladungsgut bspw. ausgelöst durch das Schließen eines (Tür)Kontakts am Transportwagen oder der Start des Transportvorgangs des beladenen Transportwagens von einer Lagerstelle bspw. an einem Bahnhof bspw. signalisiert durch ein automatisches Signal ausgelöst durch ein Verlassen der Lagerstelle. Als zweiter (Zeit)Punkt käme hier beispielsweise in Frage: Einer Beladung des Personenbeförderungsfahrzeugs mit dem beladenen Transportwagens am Bahnsteig oder eine Platzierung des Transportwagens in einem Kühlraum des Personenbeförderungsfahrzeugs oder der Zeitpunkt des Anschließens des Transportwagens an eine Stromversorgungseinheit des Personenbeförderungsfahrzeugs.

Unter Beladungsgut soll hier jedes dem Fachmann als einsetzbar erachtetes Gut verstanden werden, wie ein Lebensmittel, ein medizinisches Produkt oder ein chemisches Produkt. Bevorzugt ist das Beladungsgut ein Lebensmittel (Speise und/oder Getränk). Diese Lebensmittel können jeden dem Fachmann für sinnvoll verstandenen Zustand haben, wie roh, gekocht, lyophilisiert, gefroren etc.

Ferner soll unter einem Transportwagen ein Behältnis verstanden werden, das in seinen Eigenschaften (Größe, Gewicht, mit Rädern, Rollen und/oder Kufen ausgestattet etc.) so ausgeführt ist, dass es von etwa drei durchschnittlich konstituierten Personen mit deren eigenen Kraftaufwand, bevorzugt von nur einer durchschnittlich konstituierten Person, befördert werden kann (z. B. durch Schieben, Ziehen, Drücken etc.). Des Weiteren soll diese Spezifikation nicht ausschließen, dass der Transportwagen auch mittels eines Fahrzeugs, Flugmittels o. Ä. zum Zielort befördert werden könnte. Unter "eigenem Kraftaufwand" soll hier nicht das Bedienen eines Pedals, eines Auslösers (Schalter) oder einer Bedienkonsole/Joystick o. Ä. verstanden werden.

Solch ein Transportwagen kann beispielsweise ähnlich aufgebaut sein wie ein sogenannter Bordtrolley gegenwärtig eingesetzt zum Versorgen von Zügen oder Flugzeugen. Ein solcher hat beispielsweise ein Fassungsvolumen von 50 Liter (L) bis 500 L und die Maße in Zentimetern (cm) mit einer Höhe (H) von 50 cm bis 200 cm, einer Breite (B) von 20 cm bis 80 cm und einer Tiefe (T) von 50 cm bis 200 cm. Bevorzugt hat der Transportwagen ein Fassungsvolumen von ungefähr 200 L und die Maße in Zentimetern (cm) (H/B/T) von 100 cm / 30 cm / 100 cm.

Ein Personenbeförderungsfahrzeug kann hier jedes zur Beförderung von Personen verwendete Fahrzeug sein, wie beispielsweise ein Schienenfahrzeug, wie ein Zug (bevorzugt ein Hochgeschwindigkeitszug), eine U-Bahn oder Straßenbahn, oder ein Bus oder ein Schiff oder ein Flugzeug. Bevorzugt ist das Personenbeförderungsfahrzeug ein Zug bzw. ein Hochgeschwindigkeitszug.

Unter einem getakteten Transportsystem soll hier ein System verstanden werden, bei dem der Betrieb des Systems auf einen im Vorfeld genau festgelegten Zeitplan ausgerichtet ist. Hierbei sind alle beteiligten "Komponenten", wie die benötigte Anzahl von Verkehrsmitteln bzw. Personenbeförderungsfahrzeugen, eine benötigte Anzahl an Personal, Wartungszeiten, eine Ausstattung des Verkehrsnetzes selbst (Gleisanlagen, Luftraum, Bahnhöfe, Flughäfen etc.) oder eine Aufenthaltszeit in Depots oder an Bahnhöfen/Flughäfen auf die Erfüllung dieses Zeitplans ausgerichtet. Eine Abweichung von dem Zeitplan bzw. seiner festen oft auch engen Taktung kann ein solches System erheblich beeinträchtigen und muss vermieden werden. Bevorzugt ist das getaktete Transportsystem ein Zugnetz wie beispielsweise das der Deutschen Bahn.

Unter einer Temperaturüberwachungsvorrichtung soll hier jede Vorrichtung verstanden werden, die zumindest eine Temperatur, insbesondere die Temperatur(en) der Kühlkette, überwachen kann. Ferner soll unter einer Temperaturüberwachungsinformation jede dem Fachmann für sinnvoll erscheinende Information verstanden werden, die aus einer Temperaturüberwachung resultiert bzw. sich auf die gemessene Temperatur bezieht. Dies kann bspw. die Temperatur selbst sein, eine Temperaturdifferenz, ein(e) Zeitpunkt/Uhrzeit und/oder ein Druck.

Die Temperaturüberwachungsvorrichtung ist so ausgeführt, dass die (Kühl)Temperatur, bei der das Beladungsgut gelagert wird bzw. die auf das Beladungsgut wirkt, während des Transports zwischen den beiden Punkten ständig und/oder durchgehend überwacht wird.

Des Weiteren wird vorgeschlagen, dass die Überwachung der Kühlkette mittels eines durch den Transportwagen generierten Signals (Information) aktiviert wird. Hierdurch kann die Aktivierung sehr einfach systemimmanent erfolgen. Dies ist für einen Bediener des Transportwagens (Person, die den Transportwagen zum Personenbeförderungsfahrzeug transportiert) sehr komfortabel. Zudem kann ein Vergessen der Aktivierung der Überwachung leicht verhindert werden. Ein solches Signal kann jedes vom Fachmann einsetzbares Signal sein, wie beispielsweise ein Signal ausgelöst durch ein Schließen eines Türkontakts einer Tür des Transportwagens, ein Durchfahren einer Lichtschranke bspw. an einem Ausgang aus einem Lagerraum des Transportwagens oder das Erkennen des Bewegens des Transportwagens bspw. durch einen Beschleunigungssensor etc.

Alternativ und/oder zusätzlich wäre eine Aktivierung durch ein externes Signal (nicht ausgelöst durch den Transportwagen) denkbar bspw. durch Betätigen eines Schalters am Transportwagen bspw. durch den Bediener.

Ferner ist es vorteilhaft, wenn die Überwachung der Kühlkette durch eine Zustandsänderung am Transportwagen aktiviert wird, wodurch die Aktivierungssicherheit weiter erhöht werden kann, da externe Mechanismen ungenutzt bleiben. Eine solche Zustandsänderung kann jede vom Fachmann denkbare Zustandsänderung sein, wie beispielsweise das Schließen des Türkontakts oder die Bewegung des Transportwagens mit Aktivierung eines Beschleunigungssensors etc.

Eine bevorzugte Weiterbildung besteht darin, dass die Überwachung der Kühlkette mittels eines, insbesondere elektrischen, Signals ausgelöst durch einen Kontaktsensor, insbesondere eines Türkontakts, aktiviert wird. Hierdurch kann die Aktivierung der Überwachung der Kühlkette mit dem Abschluss der Beladung des Transportwagens mit Beladungsgut vorteilhaft verknüpft werden, wodurch die Überwachung automatisch aktiviert wird.

Vorteilhafterweise wird die zumindest ein von der Temperaturüberwachungsvorrichtung ermittelte Temperaturüberwachungsinformation in einer Speichereinheit der Temperaturüberwachungsvorrichtung gespeichert. Hierdurch können die Informationen sicher erfasst werden und gegebenenfalls zu einem späteren Zeitpunkt verwendet und/oder verarbeitet werden.

In einer weiteren Ausgestaltung der Erfindung wird die zumindest eine Temperaturüberwachungsinformation kabelgebunden an das Personenbeförderungsfahrzeug übermittelt. Dadurch kann die Übermittlung sicher erfolgen. Ferner kann so die Gefahr einer Manipulation durch Unberechtigte minimiert werden. Zudem kann die Übermittlung durch Herstellen des Kabelkontakts zwischen dem Transportwagen und dem Personenbeförderungsfahrzeug einfach aktiviert werden.

Alternativ ist es denkbar, dass die zumindest eine Temperaturüberwachungsinformation kabellos an das Personenbeförderungsfahrzeug übermittelt wird. Dies kann komfortabel sein, da ein Einsatz von z. B. länderspezifischen Kabelsystemen entfällt oder der Transportwagen behinderungsfrei (durch ein Kabel) transportiert und/oder platziert werden kann. Bevorzugt wäre hier die Übermittlung über ein WLAN System. Generell wäre es aber auch denkbar die Temperaturüberwachungsinformation mittels eines Datenspeichermediums, wie ein Datenstick oder eine CD zu übermitteln.

Zudem wird vorgeschlagen, dass im Personenbeförderungsfahrzeug unter Verwendung der zumindest einen Temperaturüberwachungsinformation eine Weiterbehandlung des zu kühlenden Beladungsguts gesteuert wird. Dadurch kann auf einen speziellen Zustand des Beladungsguts reagiert werden. Beispielsweise kann so ein Kühlbedarf an die vorliegenden Bedingungen angepasst werden. Damit kann eine Kühlanlage im Personenbeförderungsfahrzeug gegenüber solchen des Standes der Technik exakter und schneller auf spezielle Kühlanforderungen reagieren und somit starken Temperaturschwankungen am Beladungsgut entgegenwirken.

Eine Weiterbehandlung kann hier jede dem Fachmann für sinnvoll erscheinende Aktion sein, wie bspw. eine Anpassung der Kühltemperatur im Transportwagen selbst und/oder im Personenbeförderungsfahrzeug oder eine spezielle Handlungsanweisung an das Beladungsgut behandelnde Personen z. B Zugpersonal, wie eine Ausgabereihenfolge des Beladungsguts je nach Position des Beladungsguts im Transportwagen oder eine Aufwärmtemperatur oder-zeitdauer zur Erhalten von servierfähigem Beladungsgut.

Bevorzugt wird als Weiterbehandlung eine Handlungsanweisung an eine Bedienperson ausgegeben, wodurch diesem eine Handhabung des Beladungsguts erleichtert wird.

Alternativ und/oder zusätzlich kann es vorteilhaft sein, wenn als Weiterbehandlung zumindest ein Betriebsparameter zumindest eines Kühlraums (Kühlschrank) des Personenbeförderungsfahrzeugs für den Transportwagen angepasst wird. Dadurch kann der Kühlraum je nach Bedarf an die nötigen Kühlbedingungen angepasst werden. Dies verringert die Gefahr eines Einstellens oder Erreichens einer unzulässigen Temperatur des Beladungsguts. Zudem verringert sich hierbei ein Energiebedarf der nötig wäre, um bei einem passiven System die Temperatur des Kühlraums an die Situation mit eingestelltem Transportwagen anzupassen. Unter einem Betriebsparameter kann jeder dem Fachmann für relevant gesehener Parameter verstanden werde, wie eine Temperatur, ein Druck, ein Volumen, der Zustand einer Belüftung, eine Gaszusammensetzung etc. Der Kühlraum ist bevorzugt der einer Bordküche und/oder eines Bordrestaurants (einer sogenannten Galley).

Bevorzugterweise wird die Temperaturüberwachungsinformation an eine Prozessoreinheit/Steuereinheit der Bordküche übermittelt und von dieser verarbeitet, insbesondere zur Veranlassung und/oder Ausgabe der Weiterbehandlung.

Gemäß einer vorteilhaften Realisierung der Erfindung wird der Transportwagen beladen mit dem zu kühlenden Beladungsgut in einem Kühlraum, insbesondere der Bordküche, des Personenbeförderungsfahrzeugs platziert. Hierdurch kann eine Kühlung des Transportwagens und des Beladungsgut einfach realisiert werden.

Vorteilhafterweise wird der Transportwagen beladen mit dem zu kühlenden Beladungsgut an eine Stromversorgungseinheit des Personenbeförderungsfahrzeugs angeschlossen. Hierdurch kann eine Stromversorgungseinheit des Transportwagens geladen werden. Zudem kann eine Kühlung des Beladungsguts bei Platzierung des Transportwagens im Personenbeförderungsfahrzeug sichergestellt werden, da eine im Transportwagen verbaute Kühleinheit so auch unabhängig von einem Kühlraum des Personenbeförderungsfahrzeugs (die Stromversorgungseinheit des Transportwagens schonend) betrieben werden kann.

Ferner ist es vorteilhaft, wenn zumindest das Transportieren des mit Beladungsgut bestückten Transportwagens zum Personenbeförderungsfahrzeug, ein Einladen des Transportwagens in das Personenbeförderungsfahrzeug, das Kontaktieren des Transportwagens mit dem Personenbeförderungsfahrzeug und das Übermitteln der Temperaturüberwachungsinformation vom Transportwagen zum Personenbeförderungsfahrzeug so bemessen/kalkuliert/eingeplant ist, dass eine Zeitdauer zum durchführen dieser Schritte auf einen Zeitplan des getakteten Systems abgestimmt wird.

Die Erfindung geht ferner aus von einem Transportwagen für das zuvor beschriebene Verfahren.

Es wird vorgeschlagen, dass der Transportwagen zumindest einen kühlbaren Stauraum zur Aufnahme von zu kühlendem Beladungsgut aufweist, eine Temperaturüberwachungsvorrichtung aufweist anhand der eine Kühltemperatur der Kühlkette (zwischen dem örtlich ersten Punkt und dem örtlich zweiten Punkt) überwachbar ist, wobei die Temperaturüberwachungsvorrichtung zumindest eine Temperaturüberwachungsinformation generiert und eine Übermittlungsvorrichtung aufweist anhand der die zumindest eine Temperaturüberwachungsinformation (an das Personenbeförderungsfahrzeug) übermittelbar ist.

Durch die erfindungsgemäße Ausgestaltung kann sichergestellt werden, dass eine Kühlkette zuverlässig eingehalten werden kann. Dadurch ergibt sich gegenüber gegenwärtig genutzten Ausgestaltungen ein geringerer Verbrauch an Ressourcen, insbesondere wegen entfallender Lebensmittelentsorgung oder ineffizienter oder übermäßig stromverbrauchender Kühlbedingungen. Ferner kann eine Kühlanlage gegenüber dem Stand der Technik exakter und schneller auf spezielle Kühlanforderungen reagieren und somit starken Temperaturschwankungen am Beladungsgut entgegenwirken.

Unter einem Stauraum soll hier ein Volumen verstanden werden, dass das Beladungsgut aufnehmen kann. Hierbei ist der Stauraum bevorzugt auch ein Kühlraum. Hierfür kann der Transportwagen entweder eine aktive Kühleinheit (z. B. ein Kühlaggregat) aufweisen, wodurch der Transportwagen unabhängig von einem externen Kühlsystem betreibbar ist oder der Transportwagen kann eine passive Kühlung aufweisen, wie etwa eine Isolierung, die den Stauraum isoliert. Solch eine Konstruktion ist besonders kostengünstig realisierbar, da eine aktive Kühleinheit im Transportwagen entfällt.

Des Weiteren wird vorgeschlagen, dass die Temperaturüberwachungsvorrichtung durch ein vom Transportwagen generiertes Signal (Information) aktivierbar ist. Da somit die Aktivierung selbstgeneriert, ist kann diese sehr einfach systemimmanent erfolgen. Dies ist für einen Bediener des Transportwagens sehr komfortabel. Zudem kann ein Vergessen der Aktivierung der Überwachung leicht verhindert werden. Ein solches Signal kann jedes vom Fachmann einsetzbares Signal sein, wie beispielsweise ein Signal ausgelöst durch ein Schließen eines Türkontakts einer Tür des Transportwagens, ein Durchfahren einer Lichtschranke bspw. an einem Ausgang aus einem Lagerraum des Transportwagens oder das Erkennen des Bewegens des Transportwagens bspw. durch einen Beschleunigungssensor etc.

Es wird zudem vorgeschlagen, dass die Temperaturüberwachungsvorrichtung zumindest einen Kontaktsensor aufweist zum Auslösen der Überwachung der Kühlkette. Hierdurch kann die Aktivierung konstruktiv einfach erfolgen. Der Kontakt kann jeder dem Fachmann für anwendbar erachtete Kontakt sein, wie bspw. ein Kontakt ausgelöst durch das Schließen einer Tür, bevorzugt einer Tür des Stauraums des Transportwagens, ein Kontakt ausgelöst durch das Lösen einer Bremsvorrichtung des Transportwagens, bspw. an einem Rad des Transportwagens oder einem Griff des Transportwagens (analog eines Griffs eines Gepäckwagens am Flughafen), ein Kontakt beim Kontaktieren eines Fingerabdruckscanners etc.

Bevorzugt weist der kühlbare Stauraum zu einer Messung der Kühltemperatur im Stauraum zumindest einen Temperatursensor auf, womit die Temperatur einfach erfasst/gemessen werden kann. Dieser Temperatursensor kann batteriebetrieben sein.

Gemäß einer bevorzugten Ausgestaltung der Erfindung weist die Temperaturüberwachungsvorrichtung eine Speichereinheit zur Speicherung der zumindest einen Temperaturüberwachungsinformation auf. Hierdurch können die Informationen sicher erfasst werden und gegebenenfalls zu einem späteren Zeitpunkt verwendet und/oder verarbeitet werden. Bevorzugt weist die Speichereinheit eine Speicherprogrammierbare Steuerung (SPS) auf.

Besonders vorteilhaft ist es, wenn die Temperaturüberwachungsvorrichtung zumindest eine Stromversorgungseinheit aufweist. Hierdurch kann ein sicheres Funktionieren der Temperaturüberwachungsvorrichtung ermöglicht werden. Die Stromversorgungseinheit kann jeden dem Fachmann als einsetzbar erscheinenden Energieträger aufweisen, wie bspw. eine Batterie, ein Akku oder ein Solarpanel. Bevorzugterweise weist die Stromversorgungseinheit einen aufladbaren und/oder austauschbaren Akkumulator auf. Hierdurch kann die Stromversorgungseinheit lange eingesetzt werden und eine verkürzte Servicezeit wegen einem defekten Akkumulator entfällt.

Eine weitere Ausgestaltung der Erfindung sieht vor, dass die Temperaturüberwachungsvorrichtung eine Ausgabeeinheit aufweist. Dadurch kann ein Bediener schnell über/auf vorliegende Zustände hingewiesen/informiert werden. Die Ausgabeeinheit kann jede dem Fachmann für einsetzbar erachtete Funktionsweise haben und beispielsweise über ein optisches, akustisches oder haptisches Signal Informationen vermitteln. Vorteilhafterweise weist die Ausgabeeinheit eine Anzeigeeinheit auf, wodurch die Informationen schnell erfassbar sind. Bevorzugt weist die Ausgabeeinheit/Anzeigeeinheit zumindest eine 7-Segmentanzeige und/oder ein Display auf, wodurch die Anzeigeneinheit konstruktiv einfach realisierbar ist. Gibt die Ausgabeeinheit beispielsweise ein akustisches Signal aus, wie ein Signalton oder eine Sprachnachricht aus, kann eine visuelle Überwachung durch den Bediener des Transportwagens entfallen. Ein haptisches Signal könnte ein Vibrieren eines Teils des Transportwagens, wie etwa ein Griff ausgeführt sein. Hierbei könnte der Bediener vorteilhaft auch in einer lauten Umgebung auf die Information aufmerksam gemacht werden. Dies könnte etwa ein Signal sein, Informationen oder Hinweise auf der Anzeigeeinheit zu beachten.

Des Weiteren kann es vorteilhaft sein, wenn die Temperaturüberwachungsvorrichtung eine Prozessoreinheit zur Verarbeitung der zumindest einen Temperaturüberwachungsinformation aufweist. Hierdurch kann eine schnelle Bewertung der Temperaturüberwachungsinformation erfolgen und gegebenenfalls eine Weiterbehandlung des Beladungsguts eingeleitet werde. Hierbei können auch Vergleichsdaten in der Prozessoreinheit hinterlegt sein, welche zur Beurteilung des Zustands des Beladungsguts dienen können.

Alternativ und/oder zusätzlich kann auch das Personenbeförderungsfahrzeug eine Prozessoreinheit aufweisen. Alle Merkmale und Funktionen der Prozessoreinheit können analog zu denen bei der Prozessoreinheit des Transportwagens ausgeführt sein. Die Prozessoreinheit ist bevorzugt in einer Steuerung der/des Bordküche/Bordrestaurants (Galleysteuerung) integriert.

Die Erfindung geht ferner aus von einem System mit zumindest einem Personenbeförderungsfahrzeug und zumindest einem Transportwagen für das zuvor beschriebene Verfahren und mit den zuvor beschriebenen Merkmalen.

Es wird vorgeschlagen, dass das Personenbeförderungsfahrzeug eine Prozessoreinheit aufweist, an welche die zumindest eine Temperaturüberwachungsinformation von der Übermittlungsvorrichtung des Transportwagens übermittelbar ist.

Durch die erfindungsgemäße Ausgestaltung kann sichergestellt werden, dass eine Kühlkette zuverlässig eingehalten werden kann. Dadurch ergibt sich gegenüber gegenwärtig genutzten Ausgestaltungen ein geringerer Verbrauch an Ressourcen, insbesondere wegen entfallender Lebensmittelentsorgung oder ineffizienter oder übermäßig stromverbrauchender Kühlbedingungen. Ferner kann eine Kühlanlage gegenüber dem Stand der Technik exakter und schneller auf spezielle Kühlanforderungen reagieren und somit starken Temperaturschwankungen am Beladungsgut entgegenwirken.

Ferner ist es vorteilhaft, wenn das Personenbeförderungsfahrzeug einen Kühlraum aufweist, in dem der zumindest ein Transportwagen am zumindest zweiten Punkt platzierbar ist. Hierdurch kann eine Kühlung des Transportwagens und des Beladungsgut einfach realisiert werden.

In einer weiteren vorteilhaften Realisierung der Erfindung wird vorgeschlagen, dass der Transportwagen eine erste Kontaktvorrichtung und das Personenbeförderungsfahrzeug eine korrespondierende erste Kontaktvorrichtung aufweist, wobei der Transportwagen durch einen Kontakt der ersten Kontaktvorrichtung des Transportwagens und der korrespondierenden ersten Kontaktvorrichtung des Personenbeförderungsfahrzeugs mit Strom versorgbar ist. Hierdurch kann eine Stromversorgungseinheit (z. B aufladbarer Akkumulator) des Transportwagens geladen werden. Zudem kann eine Kühlung des Beladungsguts bei Platzierung des Transportwagens im Personenbeförderungsfahrzeug sichergestellt werden, da eine im Transportwagen verbaute Kühleinheit so auch unabhängig von einem Kühlraum des Personenbeförderungsfahrzeugs (die Stromversorgungseinheit des Transportwagens schonend) betrieben werden kann.

Hierbei soll unter einer Kontaktvorrichtung jede dem Fachmann für einsetzbar erachtete Vorrichtung verstanden werden, wie bspw. eine Steckervorrichtung, ein Federkontakt oder ein Batterieladekontakt z. B auf der Rückseite des Transportwagens. Die ersten Kontaktvorrichtungen können mit einem geeigneten weiteren Mittel verbindbar sein (verbunden werden), wie bspw. einem Kabel. Ferner kann dieses verbindende Teil auch Bestandteil zumindest einer der Kontaktvorrichtungen sein.

Des Weiteren ist vorgesehen, dass der Transportwagen zumindest eine zweite Kontaktvorrichtung und das Personenbeförderungsfahrzeug zumindest eine korrespondierende zweite Kontaktvorrichtung aufweist, wobei die zumindest eine Temperaturüberwachungsinformation anhand eines Kontakts der zumindest zweiten Kontaktvorrichtung des Transportwagens und der zumindest korrespondierenden zweiten Kontaktvorrichtung übermittelbar ist. Dadurch kann die Temperaturüberwachungsinformation sicher an das Personenbeförderungsfahrzeug übergeben werden. Die zweiten Kontaktvorrichtungen können mittels eines Datenkabels verbindbar sein.

Vorteilhafterweise sind die erste und die zumindest zweite Kontaktvorrichtung des Transportwagens einstückig miteinander ausgeführt und die erste und die zumindest zweite korrespondierende Kontaktvorrichtung des Personenbeförderungsfahrzeugs einstückig miteinander ausgeführt. Hierdurch kann eine bauraum- und bauteilsparende Konstruktion zum Einsatz kommen. Ferner kann dadurch ein Montageaufwand reduziert werden.

Unter "einstückig" soll verstanden werden, dass die erste und die zumindest zweite Kontaktvorrichtung des Transportwagens bzw. die erste und die zumindest zweite korrespondierende Kontaktvorrichtung des Personenbeförderungsfahrzeugs nur unter Funktionsverlust zumindest eines der Elemente voneinander getrennt werden können und/oder dass die Funktion der jeweiligen Elemente von demselben Bauteil ausführbar sind.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Es zeigen:
- FIG 1: eine schematische Darstellung eines Teils eines getakteten Systems für eine Personenbeförderung mit einem erfindungsgemäßen System aus einem Personenbeförderungsfahrzeug und einem erfindungsgemäßen Transportwagen zur Durchführung des erfindungsgemäßen Verfahrens,
- FIG 2: der Transportwagen aus FIG 1 in einer perspektivischen Ansicht in offenem und geschlossenem Zustand,
- FIG 3: der Transportwagen aus FIG 2 in einer schematischen Darstellung,
- FIG 4: der Transportwagen aus FIG 2 in einer weiteren schematischen Darstellung,
- FIG 5: der Transportwagen und das Personenbeförderungsfahrzeug aus FIG 1 mit ihren Hauptkomponenten in einer schematischen Darstellung und
- FIG 6: ein Blockdiagramm die Schritte des erfindungsgemäßen Verfahrens darstellend.

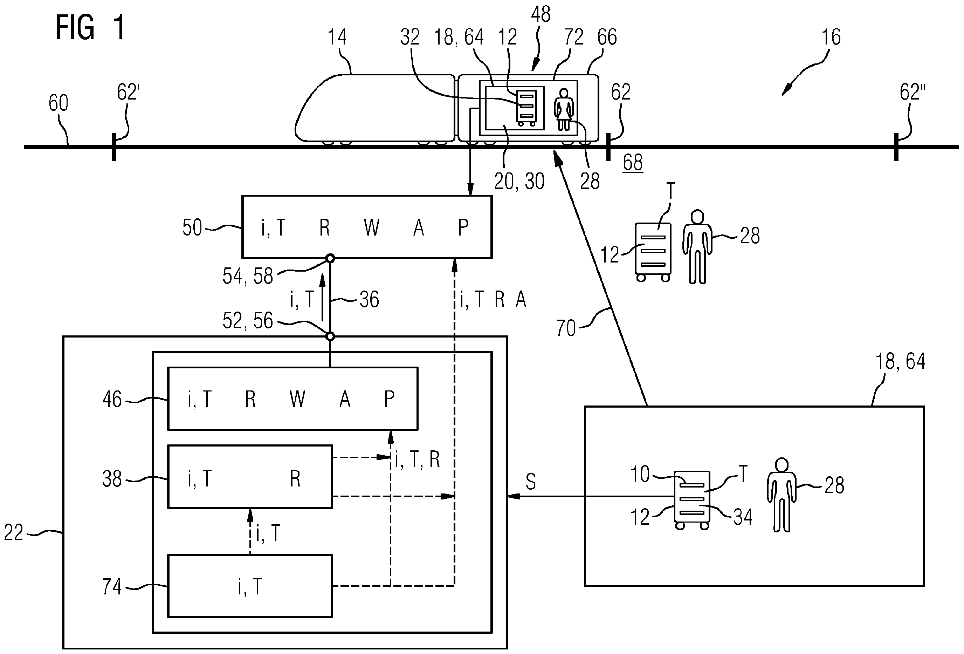

FIG 1 zeigt in einer schematischen Übersichtsdarstellung einen Teil eines getakteten Systems 16, wie beispielsweise das Betriebsnetz der Deutschen Bahn. Hierbei fährt ein Personenbeförderungsfahrzeug 14 in/auf einem Schienennetz 60 und passiert hierbei mehrere Bahnhöfe 62, 62', 62", von denen hier drei exemplarisch angezeigt sind. Bei dem Aufenthalt des Personenbeförderungsfahrzeugs 14 an Bahnhof 62 wird ein Bordrestaurant 64 mit neuen Speisen und Getränken ausgestattet.

Hierbei wird ein erfindungsgemäßes Verfahren zur Überwachung einer Kühlkette von zu kühlendem Beladungsgut 10, wie Speisen und Getränke, eines erfindungsgemäßen Transportwagens 12 zur Versorgung eines Personenbeförderungsfahrzeugs 14 betrieben in dem getakteten Transportsystem 16 angewendet. Hierbei stellen das Personenbeförderungsfahrzeugs 14 und der Transportwagen 12 ein System 48 dar. Bei diesem Verfahren wird zwischen einem örtlich ersten Punkt 18, wie einer Lagerstelle 64 des Beladungsguts 10 am Bahnhof 62, und einem örtlich zweiten Punkt 20, wie ein Kühlraum 30 eines Bordrestaurants 66 des Personenbeförderungsfahrzeugs 14, eine Temperatur T der Kühlkette überwacht, zwischen dem ersten Punkt 18 und dem zweiten Punkt 20 die eine Temperatur T durch eine Temperaturüberwachungsvorrichtung 22 gemessen und eine Temperaturüberwachungsinformation i bezogen auf die gemessene Temperatur T am zweiten Punkt 20 an das Personenbeförderungsfahrzeug 14 übermittelt (Details siehe unten).

Diese Speisen und Getränke werden als Beladungsgut 10 eines erfindungsgemäßen Transportwagens 12 von der Lagerstelle 64 am Bahnhof 62 zum Personenbeförderungsfahrzeug 14 an einem Bahngleis 68 gebracht. Hierbei muss eine Bestückung des Transportwagens 12 mit Beladungsgut 10 und ein Transport des bestückten Transportwagens 12 auf das getaktete System 16 bzw. dessen Zeitplan, also die Ankunft und Abfahrt des Personenbeförderungsfahrzeugs 14 abgestimmt werden. Ferner muss sichergestellt werden, dass eine Kühlkette des Beladungsguts 10 auf dem Weg 70 von der Lagerstelle 64 bis zu dem Kühlraum 30 oder Kühlschrank einer Bordküche 72 des Bordrestaurant 66 nicht unterbrochen wird.

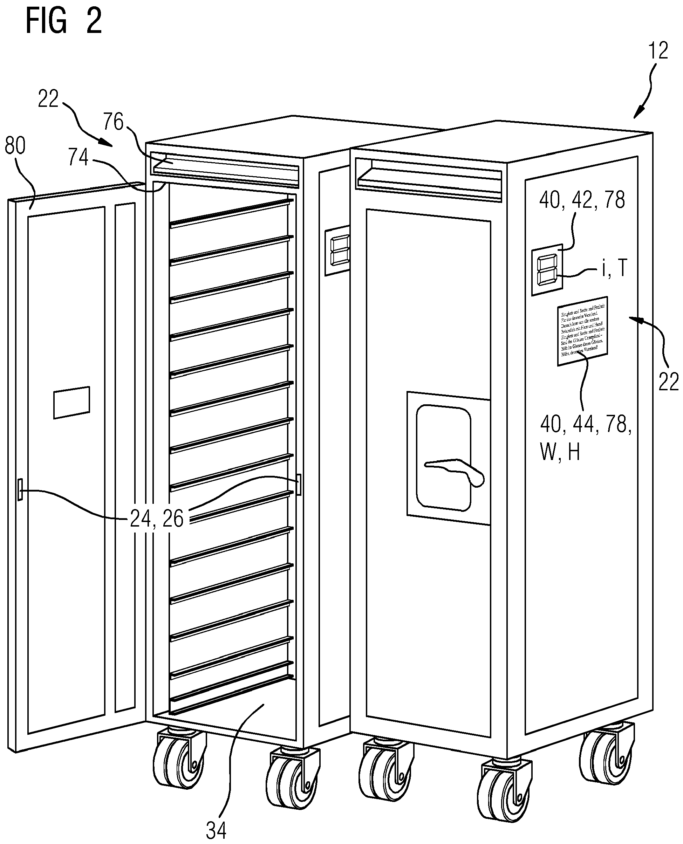

Wie in den FIG 2 bis 5, die den Transportwagen 12 in einer perspektivischen Ansicht in offenem und geschlossenem Zustand, diesen in zwei schematischen Darstellungen und den Transportwagen 12 und das Personenbeförderungsfahrzeug 14 mit ihren Hauptkomponenten in einer schematischen Darstellung zeigen, dargestellt ist, weist hierfür der Transportwagen 12 einen kühlbaren Stauraum 34 zur Aufnahme des zu kühlenden Beladungsguts 10, die Temperaturüberwachungsvorrichtung 22 und eine Übermittlungsvorrichtung 36 auf.

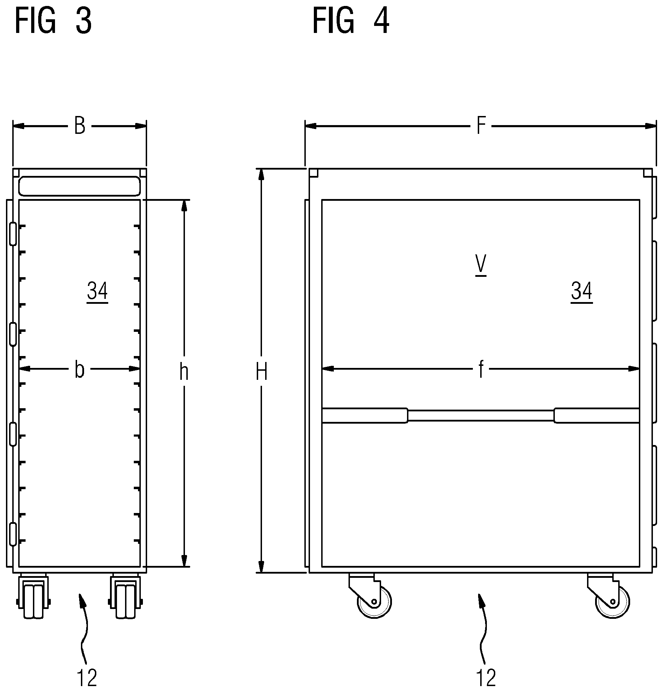

Wie in FIG 3 und 4 zu sehen ist, weist der Transportwagen 12 ohne Räder eine Höhe H von ca. 95 Zentimetern (cm), eine Breite B von ca. 35 cm und eine Tiefe F von ca. 82 cm auf. Der Stauraum 34 wiederum hat eine Höhe h von 85 cm, eine Breite b von 30 cm, eine Tiefe f von 78cm und ein Aufnahmevolumen von ca. 200 Liter (L).

Anhand der Temperaturüberwachungsvorrichtung 22 ist eine Kühltemperatur T der Kühlkette überwachbar. Die Temperatur T innerhalb des Stauraums 34 wird mittels eines Temperatursensors 74, angebracht innerhalb des Stauraums 34, gemessen bzw. ermittelt (nicht im Detail gezeigt). Der Temperatursensor 74 wird mit einer Stromversorgungseinheit 76 in der Form eines aufladbaren und austauschbaren Akkumulators mit Strom versorgt (nicht im Detail gezeigt).

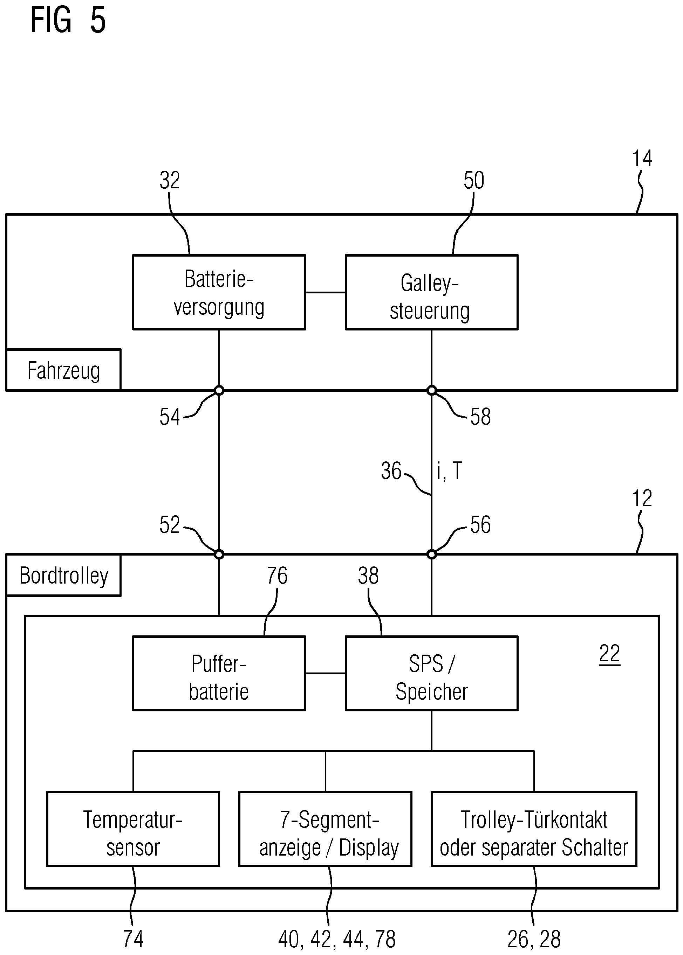

Bei der Überwachung der Kühltemperatur T generiert die Temperaturüberwachungsvorrichtung 22, die in FIG 1 zu einer besseren Darstellbarkeit vergrößert neben dem Transportwagen 12 gezeigt ist, eine Temperaturüberwachungsinformation i, wie beispielsweise die ermittelte Temperatur T. Die Temperaturüberwachungsinformation i wird in einer Speichereinheit 38 der Temperaturüberwachungsvorrichtung 22 gespeichert (siehe auch FIG 5). Alternativ kann die Temperaturüberwachungsinformation i (Temperatur T) auch gleich an eine Prozessoreinheit 46 der Temperaturüberwachungsvorrichtung 22 übermittelt werden. Des Weiteren kann die Temperaturüberwachungsinformation i (Temperatur T) alternativ und/oder zusätzlich entweder gleich vom Temperatursensor 74 oder der Speichereinheit 38 an eine Prozessoreinheit 50 einer Steuerung der Bordküche 72 (Galleysteuerung) des Personenbeförderungsfahrzeugs 14 übermittelt werden, wobei diese Prozessoreinheit 50 in FIG 1 zu einer besseren Darstellbarkeit vergrößert unter dem Personenbeförderungsfahrzeug 14 gezeigt ist.

Ferner wird die Temperaturüberwachungsinformation i (Temperatur T) in einer Ausgabeeinheit 40 ausgegeben. Diese ist beispielsweise eine Anzeigeeinheit 78 in der Form einer 7-Segmentanzeige 42. Die Anzeigeeinheit 78 könnte auch ein Display 44 aufweisen oder sein. Diese Ausgabeeinheit 40 kann an jeder, dem Fachmann sinnvoll erscheinenden Position des Transportwagens 12 angeordnet sein und ist in FIG 2 exemplarisch an einer Seitenwand des Transportwagens 12 angeordnet.

Des Weiteren weist die Temperaturüberwachungsvorrichtung 22 zum Auslösen/Aktivieren der Überwachung der Kühlkette einen Kontaktsensor 24 in der Form eines Türkontakts 26 auf, der beim Schließen einer Tür 80 des Transportwagens 12 bzw. des Stauraums 34 aktiviert wird. Dadurch ist die Überwachung der Kühlkette von einem Signal S, welches vom Transportwagen 12 selbst generierte wird, aktivierbar.

Ferner weist die Temperaturüberwachungsvorrichtung 22 die Prozessoreinheit 46 zur Verarbeitung der Temperaturüberwachungsinformation i auf (siehe auch FIG 5). Mittels dieser kann die Temperaturüberwachungsinformation i zum Beispiel mit in der Speichereinheit 38 hinterlegten Referenzwerten R verglichen und gegebenenfalls bewertet werden.

Die Prozessoreinheit 46 kann zudem eine Weiterbehandlung W des Beladungsguts 10 steuern. Dies kann zum Beispiel indem erfolgen, dass als Weiterbehandlung W eine Handlungsanweisung A an eine Bedienperson 28 ausgegeben wird. Dies kann eine Person sein, die den Transportwagen 12 zum Personenbeförderungsfahrzeug 14 transportiert oder Zugpersonal sein, das im Bordrestaurant 72 arbeitet. Diese Handlungsanweisung A kann beispielsweise über das Display 44 des Transportwagens 12 oder einem Display der Bordküche 72 (nicht näher gezeigt) angezeigt werden.

Wie oben erwähnt, können diese Schritte auch erst von der Prozessoreinheit 50 des Personenbeförderungsfahrzeugs 14 ausgeführt werden.

Ferner kann als Weiterbehandlung W zumindest ein Betriebsparameter P des Kühlraums 30 des Personenbeförderungsfahrzeugs 14, wie beispielsweise eine Temperatur, angepasst werden. Die kann automatisch, also unabhängig von einem Eingriff der Bedienperson 28, von der Prozessoreinheit 50 des Personenbeförderungsfahrzeugs 14 gesteuert werden.

Der Transportwagen 12 und das Personenbeförderungsfahrzeug 14 bzw. die hierfür vorgesehenen Einrichtungen des Personenbeförderungsfahrzeugs 14 (nicht näher gezeigt) sind mittels Kontaktvorrichtungen 52, 54, 56, 58 verbindbar. Diese können beispielsweise als Steckerverbindung, Federkontakt, oder Batteriekontakt, Stromkabel, Datenkabel etc. ausgeführt sein.

Wie oben ausgeführt ist die Temperaturüberwachungsinformation i mittels eines Kontakts zwischen dem Transportwagen 12 und dem Personenbeförderungsfahrzeug 14 bzw. einer Übermittlungsvorrichtung 36 an die Prozessoreinheit 50 des Personenbeförderungsfahrzeugs 14 übermittelbar. Hierfür weist der Transportwagen 12 eine zweite Kontaktvorrichtung 56 und das Personenbeförderungsfahrzeug 14 bzw. die Prozessoreinheit 50 eine korrespondierende zweite Kontaktvorrichtung 58 auf. Die können beispielsweise USB-Steckkontakte mit einem verbindenden Datenkabel sein.

Zu einer Stromversorgung der Stromversorgungseinheit 76 des Temperatursensors 74 des Transportwagens 12 weist dieser eine erste Kontaktvorrichtung 52 und das Personenbeförderungsfahrzeug 14 eine korrespondierende erste Kontaktvorrichtung 54 auf. Hierdurch kann die Stromversorgungseinheit 76 bzw. der Akkumulator des Temperatursensors 74 über eine Stromversorgungseinheit 32 des Personenbeförderungsfahrzeugs 14 bzw. des Kühlraums 30 der Bordküche 72 nach Kontakt aufgeladen werden.

Eine besonders platzsparende Anordnung kann bereitgestellt werden, wenn die erste und die zweite Kontaktvorrichtung 52, 56 des Transportwagens 12 einstückig miteinander ausgeführt sind und die erste und die zumindest zweite korrespondierende Kontaktvorrichtung 54, 58 des Personenbeförderungsfahrzeugs 14 einstückig miteinander ausgeführt sind.

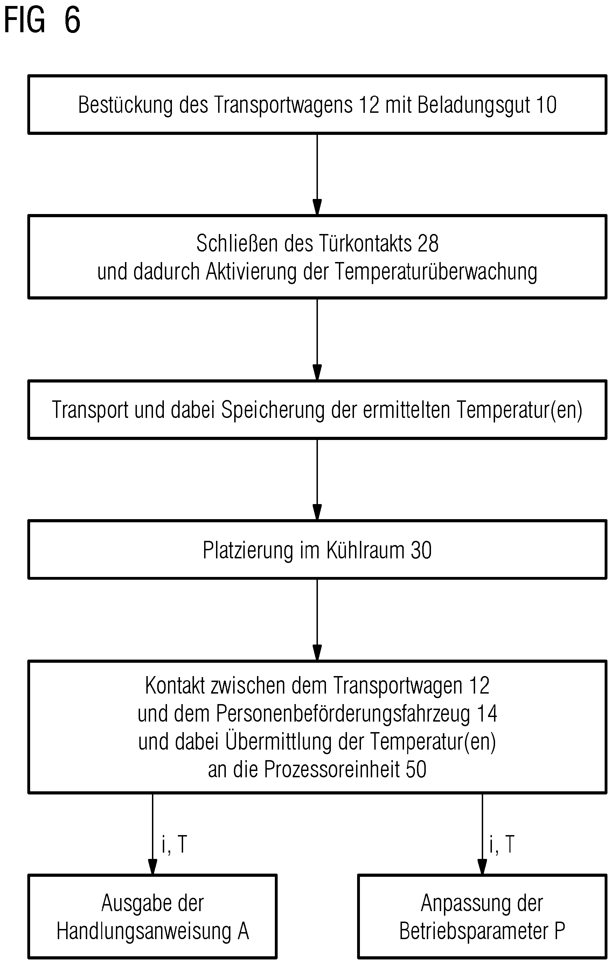

Im weiteren Text und anhand von FIG 6 sollen nun Schritte des erfindungsgemäßen Verfahrens beschrieben werden.

In einem Vorschritt wird der Transportwagen 12 in der Lagerstelle 64 von einer Bedienperson 28 mit Beladungsgut 10 bestückt. In einem ersten Schritt des Verfahrens wird die Tür 80 des Stauraum 34 des Transportwagens 12 geschlossen, was den Kontaktsensor 24 aktiviert bzw. den Türkontakt 26 schließt, wodurch die Überwachung der Kühltemperatur(en) T der Kühlkette des Beladungsgut 10 im Transportwagen 12 aktiviert wird. Somit wird die Überwachung der Kühlkette mittels eines durch den Transportwagen 12 generierten Signals S aktiviert bzw. wird die Überwachung der Kühlkette durch eine Zustandsänderung am Transportwagen 12 aktiviert bzw. die Überwachung der Kühlkette mittels eines elektrischen Signals S ausgelöst durch den Kontaktsensor 24 aktiviert.

In einem Folgeschritt wird der bestückte Transportwagen 12 von einer Bedienperson 28 zum Bahngleis 68 bzw. zum Personenbeförderungsfahrzeug 14 gebracht. Während des Transports wird die Temperatur T im Stauraum 34 ständig/durchgehend vom Temperatursensor 74 erfasst und in der Speichereinheit 38 gespeichert. Die Temperatur T kann in der Ausgabeeinheit 40 bzw. mittels der 7-Segmentanzeige 42 angezeigt werden.

Am Personenbeförderungsfahrzeug 14 wird der Transportwagen 12 beladen mit dem zu kühlenden Beladungsgut 10 in dem Kühlraum 28 des Personenbeförderungsfahrzeugs 14 bzw. dessen Bordküche 72 platziert. Hierbei oder danach wird der Transportwagen 12 beladen mit dem zu kühlenden Beladungsgut 10 an die Stromversorgungseinheit 30 des Personenbeförderungsfahrzeugs 14 und zur Übermittlung der Temperaturüberwachungsinformation i bezogen auf die gemessene Temperatur T an die Prozessoreinheit 50 angeschlossen. Die erfolgt bevorzugt über einen Kabelkontakt, wodurch die Temperaturüberwachungsinformation i kabelgebunden an das Personenbeförderungsfahrzeug 14 übermittelt wird.

Somit wird die Temperatur T der Kühlkette örtlich und auch zeitlich zwischen einem ersten Punkt 18, also der Lagestelle 64 bzw. ab dem Moment des Schließens der Tür 80 und dem zweiten Punkt 20, also im Kühlraum 30 bzw. ab der Platzierung des Transportwagens im Kühlraum 30 und dem Anschließen des Transportwagens 10 an die Prozessoreinheit 50 und damit dem Moment der Datenübermittlung überwacht. Ferner wird zwischen dem ersten Punkt 18 und dem zweiten Punkt 20 die Temperatur T durch die Temperaturüberwachungsvorrichtung 22 bzw. dem Temperatursensor 74 gemessen. Am zweiten Punkt wird die Temperaturüberwachungsinformation i bezogen auf die gemessene Temperatur T an das Personenbeförderungsfahrzeug 14 übermittelt.

Im Personenbeförderungsfahrzeug 14 bzw. in dessen Prozessoreinheit 50 kann unter Verwendung der Temperaturüberwachungsinformation i eine Weiterbehandlung W des zu kühlenden Beladungsguts 10 gesteuert werden. Hierfür kann, wie oben ausgeführt, eine Handlungsanweisung A an eine Bedienperson 26 ausgegeben und/oder ein Betriebsparameter P des Kühlraums 30 des Personenbeförderungsfahrzeugs 14 für den Transportwagen 12 angepasst werden.

Der Transportwagen 12 (Bordtrolley) werden mit einem integrierten Temperatursensor 74 (z. B. batteriebetrieben) ausgestattet. Die interne Batterie ist aufladbar, sowie austauschbar. Der Temperatursensor 74 erfasst die Temperatur T ab dem Catering (Z. B. wird die Tür 80 des Trolleys geschlossen was per Kontakt überwacht wird. Möglich wäre auch ein separater Schalter.). Optional könnte diese Temperatur T mittels einer 7-Segmentanzeige oder einem Display an/auf dem Trolley angezeigt werden. Beim Hinschieben in das Personenbeförderungsfahrzeug 14 bzw. den Zug (in den Kühlschrank) werden die Temperaturerfassungsdaten an die Prozessoreinheit 50 der Bordküche 72 bzw. an de Galleysteuerung übergeben (z. B. mittels einer Steckerverbindung, einem Federkontakt oder eines Batteriekontakts auf der Rückseite des Trolleys). In der Galleysteuerung werden diese Daten dann ausgewertet, gespeichert und ggf. eine Empfehlung / Vorgabe zur weiteren Vorgehensweise angegeben. Im Weiteren können bei Übergabe der aufgezeichneten Daten vom Trolley (z. B einer Innentemperatur und/oder Außentemperatur) an die Galleysteuerung eine Kälteanlage der Bordküche 72 entsprechend reguliert werden. Die Energiemenge, die für den Ausgleich nötig ist, wird sofort zur Verfügung gestellt und nicht erst der Wärmeübergang durch die Trolleywand abgewartet. Dies ergibt, wenn warme Trolleys (wärmer als die Temperatur des Kühlschranks) in den Kühlschrank geschoben werden, einen erheblichen Zeitvorteil beim Temperaturausgleich.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Überwachung einer Kühlkette von zu kühlendem Beladungsgut (10) eines Transportwagens (12) zur Versorgung eines Personenbeförderungsfahrzeugs (14) betrieben in einem getakteten Transportsystem (16),
**dadurch gekennzeichnet, dass**
- zwischen einem örtlich ersten Punkt (18) und zumindest einem örtlich zweiten Punkt (20) zumindest eine Temperatur (T) der Kühlkette überwacht wird,
- zwischen dem ersten Punkt (18) und dem zweiten Punkt (20) die zumindest eine Temperatur (T) durch eine Temperaturüberwachungsvorrichtung (22) gemessen wird und
- zumindest eine Temperaturüberwachungsinformation (i) bezogen auf die gemessene Temperatur (T) am zumindest zweiten Punkt (20) an das Personenbeförderungsfahrzeug (14) übermittelt wird.

2. Verfahren nach Anspruch 1,
**dadurch gekennzeichnet, dass**
die Überwachung der Kühlkette mittels eines durch den Transportwagen (12) generierten Signals (S) aktiviert wird und/oder die Überwachung der Kühlkette durch eine Zustandsänderung am Transportwagen (12) aktiviert wird und/oder die Überwachung der Kühlkette mittels eines, insbesondere elektrischen, Signals (S) ausgelöst durch einen Kontaktsensor (24), insbesondere eines Türkontakts (26) aktiviert wird.

3. Verfahren nach Anspruch 1 oder 2,
**dadurch gekennzeichnet, dass**
die zumindest eine Temperaturüberwachungsinformation (i) kabelgebunden an das Personenbeförderungsfahrzeug (14) übermittelt wird oder kabellos an das Personenbeförderungsfahrzeug (14) übermittelt wird.

4. Verfahren nach zumindest einem der vorhergehenden Ansprüchen,
**dadurch gekennzeichnet, dass**
im Personenbeförderungsfahrzeug (14) unter Verwendung der zumindest einen Temperaturüberwachungsinformation (i) eine Weiterbehandlung (W) des zu kühlenden Beladungsguts (10) gesteuert wird.

5. Verfahren nach Anspruch 4,
**dadurch gekennzeichnet, dass**
als Weiterbehandlung (W) eine Handlungsanweisung (A) an Bedienperson (28) ausgegeben wird und/oder als Weiterbehandlung (W) zumindest ein Betriebsparameter (P) zumindest eines Kühlraums (30) des Personenbeförderungsfahrzeugs (14) für den Transportwagen (12) angepasst wird.

6. Verfahren nach zumindest einem der vorhergehenden Ansprüchen,
**dadurch gekennzeichnet, dass**
der Transportwagen (12) beladen mit dem zu kühlenden Beladungsgut (10) in einem Kühlraum (30) des Personenbeförderungsfahrzeugs (14) platziert wird.

7. Verfahren nach zumindest einem der vorhergehenden Ansprüchen,
**dadurch gekennzeichnet, dass**
der Transportwagen (12) beladen mit dem zu kühlenden Beladungsgut (10) an eine Stromversorgungseinheit (32) des Personenbeförderungsfahrzeugs (14) angeschlossen wird.

8. Transportwagen (12) für ein Verfahren nach zumindest einem der Ansprüche 1 bis 7,
**gekennzeichnet durch**:
- zumindest einen kühlbaren Stauraum (34) zur Aufnahme von zu kühlendem Beladungsgut (10),
- eine Temperaturüberwachungsvorrichtung (22) anhand der eine Kühltemperatur (T) der Kühlkette überwachbar ist, wobei die Temperaturüberwachungsvorrichtung (22) zumindest eine Temperaturüberwachungsinformation (i) generiert und
- eine Übermittlungsvorrichtung (36) anhand der die zumindest eine Temperaturüberwachungsinformation (i) übermittelbar ist.

9. Transportwagen nach Anspruch 8,
dadurch gegenzeichnet, dass
die Temperaturüberwachungsvorrichtung (22) durch ein vom Transportwagen (12) generiertes Signal (S) aktivierbar ist.

10. Transportwagen nach Anspruch 8 oder 9,
dadurch gegenzeichnet, dass
die Temperaturüberwachungsvorrichtung (22) zumindest einen Kontaktsensor (24) aufweist zum Auslösen der Überwachung der Kühlkette.

11. Transportwagen nach zumindest einem der
Ansprüche 8 bis 10,
dadurch gegenzeichnet, dass
die Temperaturüberwachungsvorrichtung (22) eine Speichereinheit (38) zur Speicherung der zumindest einen Temperaturüberwachungsinformation (i) aufweist.

12. Transportwagen nach zumindest einem der Ansprüche 8 bis 11,
**dadurch gekennzeichnet, dass**
die Temperaturüberwachungsvorrichtung (22) eine Ausgabeeinheit (40) aufweist und/oder wobei die Ausgabeeinheit (40) zumindest eine 7-Segmentanzeige (42) und/oder ein Display (44) aufweist.

13. Transportwagen nach zumindest einem der Ansprüche 8 bis 12,
dadurch gegenzeichnet, dass
die Temperaturüberwachungsvorrichtung (22) eine Prozessoreinheit (46) zur Verarbeitung der zumindest einen Temperaturüberwachungsinformation (i) aufweist.

14. System (48) mit zumindest einem Personenbeförderungsfahrzeug (14) und zumindest einem Transportwagen (12) für ein Verfahren nach zumindest einem der Ansprüche 1 bis 7 und nach zumindest einem der Ansprüche 8 bis 13,
**dadurch gekennzeichnet, dass**
das Personenbeförderungsfahrzeug (14) eine Prozessoreinheit (50) aufweist, an welche die zumindest eine Temperaturüberwachungsinformation (i) von der Übermittlungsvorrichtung (36) des Transportwagens (12) übermittelbar ist.

15. System nach Anspruch 14,
**dadurch gekennzeichnet dass**,
- der Transportwagen (12) eine erste Kontaktvorrichtung (52) und das Personenbeförderungsfahrzeug (14) eine korrespondierende erste Kontaktvorrichtung (54) aufweist, wobei der Transportwagen (12) durch einen Kontakt der ersten Kontaktvorrichtung (52) des Transportwagens (12) und der korrespondierenden ersten Kontaktvorrichtung (54) des Personenbeförderungsfahrzeugs (14) mit Strom versorgbar ist und/oder
- der Transportwagen (12) zumindest eine zweite Kontaktvorrichtung (56) und das Personenbeförderungsfahrzeug (14) zumindest eine korrespondierende zweite Kontaktvorrichtung (58) aufweist, wobei die zumindest eine Temperaturüberwachungsinformation (i) anhand eines Kontakts der zumindest zweiten Kontaktvorrichtung (56) des Transportwagens (12) und der zumindest korrespondierenden zweiten Kontaktvorrichtung (58) des Personenbeförderungsfahrzeugs (14) übermittelbar ist und/oder
- die erste und die zumindest zweite Kontaktvorrichtung (52, 56) des Transportwagens (12) einstückig miteinander ausgeführt sind und die erste und die zumindest zweite korrespondierende Kontaktvorrichtung (54, 58) des Personenbeförderungsfahrzeugs (14) einstückig miteinander ausgeführt sind.
